Europäisches Patentamt

European Patent Office

Office européen des brevets

(11) Publication number: **0 607 667 A1**

# EUROPEAN PATENT APPLICATION

(21) Application number: 93309625.7

(51) Int. Cl.5: **G06F  1/08**

(22) Date of filing: **01.12.93**

(30) Priority: **22.01.93 US 7528**

(43) Date of publication of application:
**27.07.94 Bulletin  94/30**

(84) Designated Contracting States:
**BE DE DK ES FR GB GR IE IT LU NL PT SE**

(71) Applicant: **ADVANCED MICRO DEVICES, INC.**
**901 Thompson Place**
**P.O. Box 3453**
**Sunnyvale, CA 94088(US)**

(72) Inventor: **Bowles, James E.**
**11716 Birchbark Trail**
**Austin, Texas 78750(US)**

(74) Representative: **BROOKES & MARTIN**
**High Holborn House**
**52/54 High Holborn**
**London, WC1V 6SE (GB)**

(54) **Apparatus for controlling a clock driver signal.**

(57) An apparatus for controlling a clock driver signal for a computing device including a microprocessor in response to a selection input signal. The apparatus receives a system clock signal having a system clock frequency and includes a first frequency varying device for receiving the system clock signal and generating a first iteration clock signal having a first iteration clock frequency in response to the system clock signal. The first iteration clock signal is synchronous with the system clock signal and is the frequency of the system clock signal multiplied by a first frequency factor. A second frequency varying device is operatively connected with the first frequency varying device for receiving the first iteration clock signal and generating a second iteration, or second internal, clock signal having a second iteration clock frequency in response to the first iteration clock signal. The second iteration clock signal is synchronous with the first iteration clock signal and is the frequency of the first iteration clock frequency multiplied by a second frequency factor. A switching device provides the clock driver signal as an output. The switching device is operatively connected with the first frequency varying device and the second frequency varying device. The switching device provides the first iteration clock signal as the output (i.e., as the clock driver signal) when the selection input signal is in a first state and provides the second iteration clock signal as the output when the selection input signal is in a second state.

Fig. 2

Rank Xerox (UK) Business Services
(3.10/3.09/3.3.4)

Microprocessor devices, such as a 386- or 486-type of microprocessor, are frequently employed with supporting electronics and supporting logic. When a microprocessor device is employed with such supporting devices, the industry generally terms the entire computing apparatus a microcomputer. Usually included in the support devices, or support logic, for a microprocessor device in such a microcomputer apparatus is a system clock which is generally comprised of a high-speed oscillator that always runs while power is provided to the microcomputer apparatus. Within the microprocessor device, a first frequency varying device, such as a phase lock loop, is generally employed to receive the system clock signal and create an internal clock signal which is a higher frequency signal synchronized with the system clock signal. The faster internal clock signal enables the microprocessor device to operate at a faster rate. In addition to providing the higher frequency internal clock signal, the phase lock loop serves the purpose of removing inaccuracies which may be encountered if the system clock signal is directly applied (even at the higher frequency) from without the microprocessor device to the microprocessor device because of interconnection capacitance, buffer capacitance, or other sources of inaccuracy.

However, the driving of the microprocessor device by internal clock signal causes significant power consumption which is a problem in such applications for a microcomputer apparatus when it is employed in battery-powered products, such as laptop or notebook computers.

Previous solutions to conserving battery power for a microcomputer apparatus have involved running the internal microprocessor clock signal at full speed or stopped. Thus, when the microprocessor is not involved in a computing operation, the internal microprocessor clock signal generator (e.g. the phase lock loop) would be shut down in order to save the power which normally would be consumed by generating the internal microprocessor clock signal. The time frames involved in such a shut down between operations may be on the order of hundreds of microseconds.

Some previous designs allow for a variable clock signal frequency, but require that variations in clock signal frequency, or clock speed, be done in small increments to avoid disruption of the phase lock loop circuitry within the microprocessor. Phase lock loops are unstable in their reaction to large frequency changes. For example, some previous specifications have required a limit of .1 of 1% change in frequency per cycle. Several problems arise when such a small change per cycle is required: (1) response time is generally too slow to fit significant clock speed variations between operations which may be, as previously mentioned, on the order of hundreds of microseconds; (2) the hardware overhead (i.e., logic circuitry to control the clock) required to achieve the fine control required for such a system is extensive and expensive; (3) as the clock signal on the microprocessor is slowed, the time to fetch information from memory is slowed and such a slower fetch from external memory (i.e., from memory external to the microprocessor) causes more power consumption by the memory; thus, slowing the clock signals is counterproductive for memory fetching operations; and (4) when memory access takes longer, the external bus (i.e., external to the microprocessor) is engaged for a longer period so that such a slower memory fetch may result in degradation of the overall performance of the entire microcomputer apparatus.

The present specification describes an apparatus for controlling a clock driver signal for a microprocessor in a microcomputer apparatus which allows the speed, or frequency, of the microprocessor internal clock signal to be reduced, or the clock driver signal may even halted, by external control.

We describe an apparatus for controlling a clock driver signal for a computing device including a microprocessor in response to a selection input signal. The apparatus receives a system clock signal having a system clock frequency and includes a first frequency varying device for receiving the system clock signal and generating a first iteration, or first internal, clock signal having a first iteration clock frequency in response to the system clock signal. The first iteration clock signal is synchronous with the system clock signal and the first iteration clock frequency is the frequency of the system clock signal multiplied by a first iteration frequency factor. The apparatus further includes a second frequency varying device operatively connected with the first frequency varying device for receiving the first iteration clock signal and generating a second iteration, or second internal, clock signal having a second iteration clock frequency in response to the first iteration clock signal. The second iteration clock signal is synchronous with the first iteration clock signal and the second iteration clock frequency is the frequency of the first iteration clock frequency multiplied by a second iteration frequency factor.

A switching device is further included in the apparatus for providing the clock driver signal as an output. The switching device is operatively connected with the first frequency varying device for receiving the first iteration clock signal and is operatively connected with the second frequency varying device for receiving the second iteration clock signal. The switching device provides the first iteration clock signal as the output (i.e., as the clock driver signal) when the selection input signal is in a first state and provides the second iteration clock signal as the output when the selection input signal is in a second state.

2

In its preferred embodiment, the selection input signal includes at least a clock control signal and an interrupt signal. The clock control signal establishes the first state when the clock control signal is at a first signal level and establishes the second state when the clock control signal is at a second signal level. The interrupt signal establishes a third' state when the interrupt signal is at a predetermined signal level. The switching device provides the first iteration clock signal as the output when the interrupt signal establishes the third state regardless of whether the clock control signal is at the first signal level or the second signal level.

Accordingly, we provide an apparatus for controlling a clock driver signal for a computing device in response to a selection input signal which provides a first frequency varying device, such as a phase lock loop, to maintain a constant frequency, regardless of the state established by the selection input signal.

We provide an apparatus for controlling a clock driver signal for a computing device in response to a selection input signal in which the first frequency varying device remains engaged throughout all states established by the selection input signal, precluding disruptions which may result from frequency shifts in clock signal outputs generated by the first frequency varying device.

We provide an apparatus for controlling a clock driver signal for a computing device in response to a selection input signal in which the apparatus includes a counter to divide the clock signal output of the first frequency varying device to a low frequency.

We provide an apparatus for controlling a clock driver signal for a computing device in response to a selection input signal which includes a switching device for switching between the clock signal output at the first frequency varying device and a divided (lower) frequency clock signal for providing a higher or lower frequency output signal as the clock driver signal in response to the selection input signal.

In the accompanying drawings, by way of example only:

Fig. 1 is a schematic block diagram of a portion of a microcomputer employing a microprocessor,

Fig. 2 is a schematic block diagram of one embodiment of the present invention, and

Fig. 3 is a schematic block diagram of an alternative embodiment of the present invention.

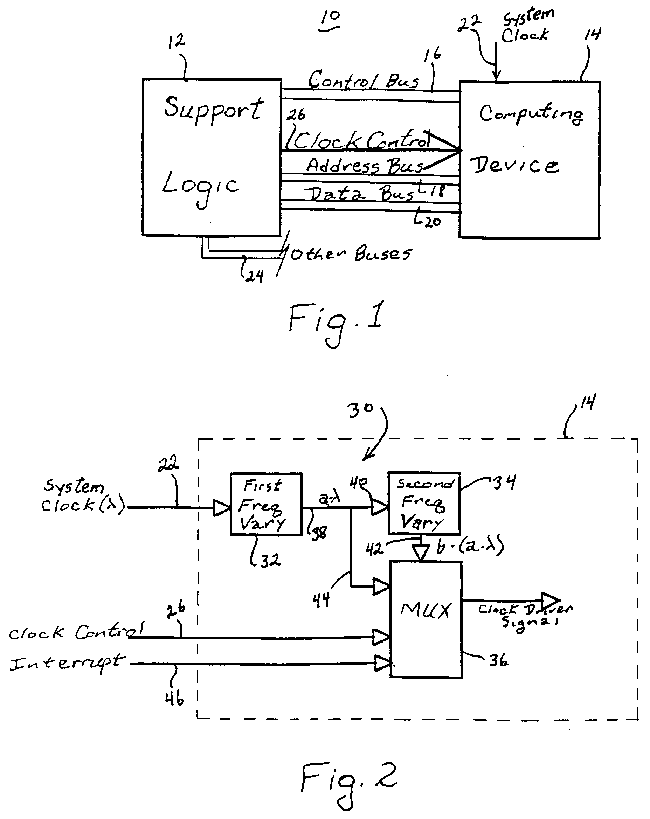

In Fig 1, a portion 10 of a microcomputer apparatus is illustrated comprising a support logic section 12 and a computing device 14. Support logic section 12 and computing device 14 are operatively connected by a control bus 16, an address bus 18, and a data bus 20. Control bus 16, address bus 18, and data bus 20 are representative of a plurality of buses which may actually operatively interconnect support logic 12 and computing device 14, which plurality of various buses are well known to those skilled in the microprocessor and microcomputer arts. A system clock signal is applied to computing device 14 at a system clock input 22. System clock input 22 may be provided from a central processing unit (not shown) associated with the portion 10 of the microcomputer apparatus, or may be ultimately provided from support logic section 12. Other buses, represented by a bus 24, may also be operatively connected with support logic section 12, such as expansion system buses or the like.

Support logic section 12 may typically include elements commonly known by those skilled in the art to comprise a "core logic" chip set which is configured to act as a "mediator" or in an "administrative" role in supporting operations of computing device 14. Computing device 14 is preferably a microprocessor device, such as a 386- or 486-type microprocessor, commonly encountered in industry.

According to the preferred embodiment of the present invention, there is also illustrated in Fig. 1 a clock control signal line 26 operatively connecting support logic section 12 and computing device 14 for conveying a clock control signal from support logic section 12 to computing device 14 in a manner to be described in greater detail hereinafter.

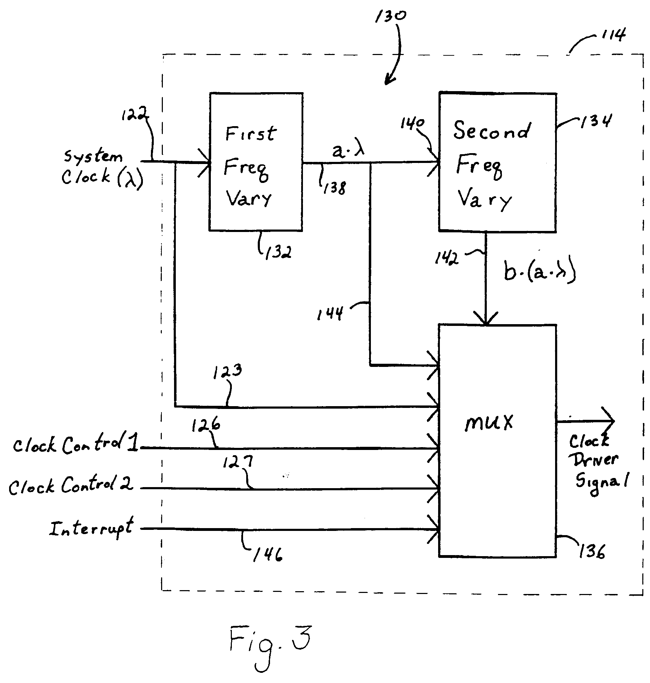

Fig. 2 is a schematic block diagram of the preferred embodiment of the apparatus of the present invention.

In order to facilitate understanding of the present invention, like elements will be identified by like reference numerals in the various figures.

In Fig. 2, a clock control apparatus 30 is illustrated as being a part of a computing device 14. Clock control apparatus 30 is comprised of a first frequency varying device 32, a second frequency varying device 34, and a switching device 36. First frequency varying device 32 is, in the most-preferred embodiment of the present invention, a phase lock loop device. First frequency varying device 32 receives a system clock signal at a system clock input 22; the system clock input signal has a frequency $\lambda$. First frequency varying device 32 produces an output on an output line 38. The output signal provided on output line 38 is a first iteration clock signal having a frequency $a \times \lambda$, where a is a first iteration frequency factor and, preferably, is a constant. Output line 38 is connected to provide the first iteration clock signal to second frequency varying device 34 at an input 40, and second frequency varying device 34 provides a second iteration clock signal as an output on an output line 42. The second iteration clock signal has a frequency equal to $b \times (a \times \lambda)$, where b is a second iteration frequency factor, preferably a constant. Switching

3

device 36 is preferably a multiplexer device which receives the first iteration clock signal via a line 44 and receives the second iteration clock signal via output line 42. Switching device 36 is responsive to a clock control signal received via a line 26 from a support logic section such as support logic section 12 in Fig. 1 (not shown in Fig. 2) and is responsive to an interrupt signal received via an interrupt line 46. Interrupt line 46 may preferably be operatively connected with a plurality of interrupt signal sources such as a system central processing unit (not shown in Fig. 2), a support logic section 12 (not shown in Fig. 2), a keyboard or other input device (not shown in Fig. 2), or other sources commonly known to those skilled in the art as sources of interrupt signals which indicate a necessity for computing device 14 being required to operate at a high frequency clock driver signal.

In its preferred embodiment, first iteration frequency factor a is preferably 1 or greater and, most preferably, is 2 or greater. Further, in the preferred embodiment of the present invention, second frequency varying device 34 is a frequency divider device and second iteration frequency factor b is less than 1 and, most preferably, on the order of .001.

In operation, the preferred embodiment of the present invention is configured to ensure that switching device 36 does not contribute to instability of first frequency varying device 32 by untimely or asynchronously switching between lines 44, 42 when a clock control signal is received via clock control signal line 26 or when an interrupt signal is received via interrupt line 46. That is, when a switching change between lines 42, 44 is required by selection input signals received via lines 26, 46, switching between lines 42, 44 is synchronized with one of the clock signals having frequencies $\lambda$, $a \times \lambda$, $b \times (a \times \lambda)$. Such synchronization is preferably synchronized with the internal clock signal having frequency $a \times \lambda$.

A transition from the lower internal clock signal (having frequency $b \times (a \times \lambda)$) to the higher internal clock signal (having frequency $a \times \lambda$) may be advantageously and timely implemented by support logic section 12 generating (or ceasing to generate) a clock control signal on clock control signal line 26. Thus, when computing device 14 is to, for example, effect a memory access (write or fetch) of an external memory device (i.e., external to computing device 14), an address strobe is sent from computing device 14 to the external memory device (not shown in the drawings) which conveys to the external memory device, "I have a valid address for an access interrogation (i.e., a fetch or a write signal) to external memory." That address strobe may be detected by support logic section 12 and interpreted by support logic section 12 as an occasion for altering (i.e., generating or ceasing to generate) the clock control signal on clock control signal line 26 to cause switching device 36 to select the higher frequency internal clock signal ($a \times \lambda$) as the clock driver signal for computing device 14. The external memory device generally takes at least one cycle to respond to such an access interrogation by computing device 14. Thus, computing device 14 has at least a one-cycle lead in selecting the higher frequency internal clock signal as its clock driver signal for effecting access interrogation of the external memory device.

In the preferred embodiment of the present invention, support logic section 12 is programmed to recognize processor idle loops in the operation of computing device 14, such as by noting a lack of external memory access, or interrogations effected by computing device 14 over a predetermined period of time.

A variety of predetermined events or conditions may occasion generation of an interrupt signal on interrupt line 46. The preferred embodiment of the present invention is configured so that switching device 36 will respond to such an interrupt signal by synchronizedly (as described earlier) selecting the higher frequency internal clock signal ($a \times \lambda$), regardless of whether a clock control signal is present on clock control signal line 26. Upon cessation of the interrupt signal on interrupt line 46, switching device 36 selects line 44, 42 as previously described in response to a clock control signal on clock control signal line 26.

Some further examples of events or conditions which impose an interrupt signal on interrupt line 46 include a need to update a memory cache located internally within computing device 14 by a device external of computing device 14, occurrence of an event which requires immediate high speed processing, or occurrence of a system reset. Other occasions for imposition of an interrupt signal on interrupt line 46 may, of course, be incorporated, either by software or by hardware implementation.

Fig. 3 is a schematic block diagram of an alternate embodiment of the apparatus of the present invention.

In Fig. 3, a clock control apparatus 130 is illustrated as being a part of a computing device 114. Clock control apparatus 130 is comprised of a first frequency varying device 132, a second frequency varying device 134, and a switching device 136. First frequency varying device 132 may be a phase lock loop device. First frequency varying device 132 receives a system clock signal at a system clock input 122; the system clock input signal has a frequency $\lambda$. First frequency varying device 132 produces an output on an output line 138. The output signal provided on output line 138 is a first iteration clock signal having a frequency $a \times \lambda$, where a is a first iteration frequency factor and, preferably, is a constant. Output line 138 is connected to provide the first iteration clock signal to second frequency varying device 134 at an input 140, and second frequency varying device 134 provides a second iteration clock signal as an output on an output line 142. The second iteration clock signal has a frequency equal to $b \times (a \times \lambda)$, where b is a second iteration frequency factor, preferably a constant. System clock input 122 is also connected with switching device 136 via system clock input line 123.

Switching device 136 is preferably a multiplexer device which receives the first iteration clock signal via a line 144, receives the second iteration clock signal via output line 142, and receives the system clock signal $\lambda$ via system clock input line 123. Switching device 136 is responsive to a first clock control signal received via a first clock control signal line 126 and is responsive to a second clock control signal received via second clock control signal line 127. Both of first clock control signal line 126 and second clock control signal line 127 are connected with a support logic section such as support logic section 12 in Fig. 1 (not shown in Fig. 3). Switching device 136 is also responsive to an interrupt signal received via an interrupt line 146. Interrupt line 146 may be operatively connected with a plurality of interrupt signal sources such as a system central processing unit (not shown in Fig. 3), a support logic section 12 (not shown in Fig. 3), a keyboard or other input device (not shown in Fig. 3), or other sources commonly known to those skilled in the art as sources of interrupt signals which indicate a necessity for computing device 114 being required to operate at a high frequency clock driver signal.

The alternate embodiment of the present invention illustrated in Fig. 3 operates in a manner similar to the preferred embodiment illustrated in Fig. 2. The alternate embodiment of Fig. 3, however, responds to both of two clock control signals in a predetermined manner to select among three inputs received by switching device 136: (1) first iteration clock signal $a \times \lambda$; (2) second iteration clock signal $b \times (a \times \lambda)$; and (3) system clock input signal $\lambda$.

By way of example, switching device 136 may respond to first clock control signal (CK1) and second clock control signal (CK2) to cause clock control apparatus 130 to function as follows:

| CK1 | CK2 | FUNCTION |
|-----|-----|----------|
| 1 | 1 | Employ first iteration clock signal $(a \times \lambda)$ |
| 1 | 0 | Employ second iteration clock signal $(b \times (a \times \lambda))$ |
| 0 | 1 | Employ system clock input signal $(\lambda)$; first frequency varying device disengaged, but running |
| 0 | 0 | Employ system clock input signal $(\lambda)$; first frequency varying device disengaged, but off |

## Claims

1. An apparatus for controlling a clock driver signal for a computing device in response to a selection input signal; the apparatus receiving a clock signal having a clock frequency; the apparatus comprising:

a first frequency varying means for receiving said clock signal and generating a first iteration clock signal having a first iteration clock frequency in response to said clock signal; said first iteration clock signal being synchronous with said clock signal and said first iteration clock frequency being said clock signal multiplied by a first iteration frequency factor;

a second frequency varying means operatively connected with said first frequency varying means for receiving said first iteration clock signal and generating a second iteration clock signal having a second iteration clock frequency in response to said first iteration clock signal; said second iteration clock signal being synchronous with said first iteration clock signal and said second iteration clock frequency being said first iteration clock frequency multiplied by a second iteration frequency factor;

a switching means for providing said clock driver signal as an output, said switching means being operatively connected with said first frequency varying means for receiving said first iteration clock signal and being operatively connected with said second frequency varying means for receiving said second iteration clock signal; said switching means providing said first iteration clock signal as said output when said selection input signal is in a first state, and said switching means providing said

5

second iteration clock signal as said output when said selection input signal is in a second state.

2. An apparatus for controlling a clock driven signal for a computing device as recited in Claim 1 wherein said first iteration frequency factor is greater than one.

3. An apparatus for controlling a clock driver signal for a computing device as recited in Claim 1 wherein said first iteration frequency factor is greater than one and said second iteration frequency factor is less than one.

4. An apparatus for controlling a clock driver signal for a computing device as recited in Claim 1 wherein said selection input signal comprises at least a clock control signal and an interrupt signal; said clock control signal establishing said first state when said clock control signal is at a first signal level and establishing said second state when said clock control signal is at a second signal level; said interrupt signal establishing a third state when said interrupt signal is at a predetermined signal level, said switching means providing a predetermined one of said first iteration clock signal and said second iteration clock signal as said output when said interrupt signal establishes said third state regardless of whether said clock control signal is at said first signal level or said second signal level.

5. An apparatus for controlling a clock driver signal for a computing device as recited in Claim 2 wherein said selection input signal comprises at least a clock control signal and an interrupt signal; said clock control signal establishing said first state when said clock control signal is at a first signal level and establishing said second state when said clock control signal is at a second signal level; said interrupt signal establishing a third state when said interrupt signal is at a predetermined signal level, said switching means providing a predetermined one of said first iteration clock signal and said second iteration clock signal as said output when said interrupt signal establishes said third state regardless of whether said clock control signal is at said first signal level or said second signal level.

6. An apparatus for controlling a clock driver signal for a computing device as recited in Claim 3 wherein said selection input signal comprises at least a clock control signal and an interrupt signal; said clock control signal establishing said first state when said clock control signal is at a first signal level and establishing said second state when said clock control signal is at a second signal level; said interrupt signal establishing a third state when said interrupt signal is at a predetermined signal level, said switching means providing a predetermined one of said first iteration clock signal and said second iteration clock signal as said output when said interrupt signal establishes said third state regardless of whether said clock control signal is at said first signal level or said second signal level.

7. An apparatus for use in a computing device for controlling a clock driver signal for said computing device in response to a selection input signal; the apparatus receiving a clock signal having a clock frequency; the apparatus comprising:
   a first frequency varying means for receiving said clock signal and generating a first iteration clock signal having a first iteration clock frequency in response to said clock signal; said first iteration clock signal being synchronous with said clock signal and said first iteration clock frequency being said clock signal multiplied by a first iteration frequency factor;
   a second frequency varying means operatively connected with said first frequency varying means for receiving said first iteration clock signal and generating a second iteration clock signal having a second iteration clock frequency in response to said first iteration clock signal; said second iteration clock signal being synchronous with said first iteration clock signal and said second iteration clock frequency being said first iteration clock frequency multiplied by a second iteration frequency factor;
   a switching means for providing said clock driver signal as an output, said switching means being operatively connected with said first frequency varying means for receiving said first iteration clock signal and being operatively connected with said second frequency varying means for receiving said second iteration clock signal; said switching means providing said first iteration clock signal as said output when said selection input signal is in a first state, and said switching means providing said second iteration clock signal as said output when said selection input signal is in a second state.

8. An apparatus for use in a computing device for controlling a clock driver signal for said computing device as recited in Claim 7 wherein said first iteration frequency factor is greater than one.

9. An apparatus for use in a computing device for controlling a clock driver signal for said computing device as recited in Claim 7 wherein said first iteration frequency factor is greater than one and said second iteration frequency factor is less than one.

10. An apparatus for use in a computing device for controlling a clock driver signal for said computing device as recited in Claim 7 wherein said selection input signal comprises at least a clock control signal and an interrupt signal; said clock control signal establishing said first state when said clock control signal is at a first signal level and establishing said second state when said clock control signal is at a second signal level; said interrupt signal establishing a third state when said interrupt signal is at a predetermined signal level, said switching means providing a predetermined one of said first iteration clock signal and said second iteration clock signal as said output when said interrupt signal establishes said third state regardless of whether said clock control signal is at said first signal level or said second signal level.

11. An apparatus for use in a computing device for controlling a clock driver signal for said computing device as recited in Claim 8 wherein said selection input signal comprises at least a clock control signal and an interrupt signal; said clock control signal establishing said first state when said clock control signal is at a first signal level and establishing said second state when said clock control signal is at a second signal level; said interrupt signal establishing a third state when said interrupt signal is at a predetermined signal level, said switching means providing a predetermined one of said first iteration clock signal and said second iteration clock signal as said output when said interrupt signal establishes said third state regardless of whether said clock control signal is at said first signal level or said second signal level.

12. An apparatus for use in a computing device for controlling a clock driver signal for said computing device as recited in Claim 9 wherein said selection input signal comprises at least a clock control signal and an interrupt signal; said clock control signal establishing said first state when said clock control signal is at a first signal level and establishing said second state when said clock control signal is at a second signal level; said interrupt signal establishing a third state when said interrupt signal is at a predetermined signal level, said switching means providing a predetermined one of said first iteration clock signal and said second iteration clock signal as said output when said interrupt signal establishes said third state regardless of whether said clock control signal is at said first signal level or said second signal level.

13. An apparatus for controlling a clock driver signal for a computing device in response to a selection input signal; the apparatus receiving a clock signal from a clock signal input, said clock signal having a clock frequency; the apparatus comprising:
a first frequency varying means operatively connected with said clock signal input for receiving said clock signal and generating a first iteration clock signal having a first iteration clock frequency in response to said clock signal; said first iteration clock signal being synchronous with said clock signal and said first iteration clock frequency being said clock signal multiplied by a first iteration frequency factor;
a second frequency varying means operatively connected with said first frequency varying means for receiving said first iteration clock signal and generating a second iteration clock signal having a second iteration clock frequency in response to said first iteration clock signal; said second iteration clock signal being synchronous with said first iteration clock signal and said second iteration clock frequency being said first iteration clock frequency multiplied by a second iteration frequency factor;
a switching means for providing said clock driver signal as an output, said switching means being operatively connected with said clock signal input for receiving said clock signal, being operatively connected with said first frequency varying means for receiving said first iteration clock signal, and being operatively connected with said second frequency varying means for receiving said second iteration clock signal; said switching means providing said first iteration clock signal as said output when said selection input signal is in a first state, said switching means providing said second iteration clock signal as said output when said selection input signal is in a second state, and said switching means providing said clock signal as said output when said selection input signal is in a third state.

14. An apparatus for controlling a clock driver signal for a computing device as recited in Claim 13 wherein said first iteration frequency factor is at least one.

**15.** An apparatus for controlling a clock driver signal for a computing device as recited in Claim 13 wherein said first iteration frequency factor is at least one and said second iteration frequency factor is less than one.

**16.** An apparatus for controlling a clock driver signal for a computing device as recited in Claim 13 wherein said selection input signal comprises at least two clock control signals and an interrupt signal; said clock control signals establishing said first state when said clock control signals are in a first signal level combination, establishing said second state when said clock control signals are in a second signal level combination, and establishing said third state when said clock control signals are in a third signal level combination; said interrupt signal establishing a fourth state when said interrupt signal is at a predetermined signal level, said switching means providing said first iteration clock signal as said output when said interrupt signal establishes said fourth state regardless of whether said clock control signal is at said first signal level combination, at said second signal level combination, or at said third signal level combination.

**17.** An apparatus for controlling a clock driver signal for a computing device as recited in Claim 14 wherein said selection input signal comprises at least two clock control signals and an interrupt signal; said clock control signals establishing said first state when said clock control signals are in a first signal level combination, establishing said second state when said clock control signals are in a second signal level combination, and establishing said third state when said clock control signals are in a third signal level combination; said interrupt signal establishing a fourth state when said interrupt signal is at a predetermined signal level, said switching means providing a predetermined one of said first iteration clock signal, said second iteration clock signal, and said clock signal as said output when said interrupt signal establishes said fourth state regardless of whether said clock control signal is at said first signal level combination, at said second signal level combination, or at said third signal level combination.

**18.** An apparatus for controlling a clock driver signal for a computing device as recited in Claim 15 wherein said selection input signal comprises at least two clock control signals and an interrupt signal; said clock control signals establishing said first state when said clock control signals are in a first signal level combination, establishing said second state when said clock control signals are in a second signal level combination, and establishing said third state when said clock control signals are in a third signal level combination; said interrupt signal establishing a fourth state when said interrupt signal is at a predetermined signal level, said switching means providing a predetermined one of said first iteration clock signal, said second iteration clock signal, and said clock signal as said output when said interrupt signal establishes said fourth state regardless of whether said clock control signal is at said first signal level combination, at said second signal level combination, or at said third signal level combination.

**19.** An apparatus for use in a computing device for controlling a clock driver signal for said computing device in response to a selection input signal; the apparatus receiving a clock signal from a clock signal input, said clock signal having a clock frequency; the apparatus comprising:

a first frequency varying means operatively connected with said clock signal input for receiving said clock signal and generating a first iteration clock signal having a first iteration clock frequency in response to said clock signal; said first iteration clock signal being synchronous with said clock signal and said first iteration clock frequency being said clock signal multiplied by a first iteration frequency factor;

a second frequency varying means operatively connected with said first frequency varying means for receiving said first iteration clock signal and generating a second iteration clock signal having a second iteration clock frequency in response to said first iteration clock signal; said second iteration clock signal being synchronous with said first iteration clock signal and said second iteration clock frequency being said first iteration clock frequency multiplied by a second iteration frequency factor;

a switching means for providing said clock driver signal as an output, said switching means being operatively connected with said first frequency varying means for receiving said first iteration clock signal, being operatively connected with said second frequency varying means for receiving said second iteration clock signal, and being operatively connected with said clock signal input for receiving said clock signal; said switching means providing said first iteration clock signal as said output when said selection input signal is in a first state, and said switching means providing said second iteration clock signal as said output when said selection input signal is in a second state, and said switching means providing said clock signal as said output when said selection input signal is in a third state.

**20.** An apparatus for use in a computing device for controlling a clock driver signal for said computing device as recited in Claim 19 wherein said first iteration frequency factor is at least one.

**21.** An apparatus for use in a computing device for controlling a clock driver signal for said computing device as recited in Claim 19 wherein said first iteration frequency factor is at least one and said second iteration frequency factor is less than one.

**22.** An apparatus for use in a computing device for controlling a clock driver signal for said computing device as recited in Claim 19 wherein said selection input signal comprises at least two clock control signals and an interrupt signal; said clock control signals establishing said first state when said clock control signals are in a first signal level combination, establishing said second state when said clock control signals are in a second signal level combination, and establishing said third state when said clock control signals are in a third signal level combination; said interrupt signal establishing a fourth state when said interrupt signal is at a predetermined signal level, said switching means providing a predetermined one of said first iteration clock signal, said second iteration clock signal, and said clock signal as said output when said interrupt signal establishes said fourth state regardless of whether said clock control signals are in said first signal level combination, at said second signal level combination, or in said third signal level combination.

**23.** An apparatus for use in a computing device for controlling a clock driver signal for said computing device as recited in Claim 20 wherein said selection input signal comprises at least two clock control signals and an interrupt signal; said clock control signals establishing said first state when said clock control signals are in a first signal level combination, establishing said second state when said clock control signals are in a second signal level combination, and establishing said third state when said clock control signals are in a third signal level combination; said interrupt signal establishing a fourth state when said interrupt signal is at a predetermined signal level, said switching means providing a predetermined one of said first iteration clock signal, said second iteration clock signal, and said clock signal as said output when said interrupt signal establishes said fourth state regardless of whether said clock control signals are in said first signal level combination, in said second signal level combination, or in said third signal level combination.

**24.** An apparatus for use in a computing device for controlling a clock driver signal for said computing device as recited in Claim 21 wherein said selection input signal comprises at least two clock control signals and an interrupt signal; said clock control signals establishing said first state when said clock control signals are in a first signal level combination, establishing said second state when said clock control signals are in a second signal level combination, and establishing said third state when said clock control signals are in a third signal level combination; said interrupt signal establishing a fourth state when said interrupt signal is at a predetermined signal level, said switching means providing a predetermined one of said first iteration clock signal, said second iteration clock signal, and said clock signal as said output when said interrupt signal establishes said fourth state regardless of whether said clock control signals are in said first signal level combination, in said second signal level combination, or in said third signal level combination.

Fig. 1

Fig. 2

Fig. 3

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| X<br>Y | EP-A-0 385 567 (IBM)<br>* page 4, line 25 - line 39; claims 1-5; figures 1,2 * | 1-3,7-9<br>5,6,11,<br>12,14,<br>15,17,<br>18,20,<br>21,23,24 | G06F1/08 |
| X<br><br>Y | EP-A-0 242 010 (IBM)<br><br>* abstract; figures 1,2 * | 1,4,7,<br>10,13,<br>16,19,22<br>5,6,11,<br>12,14,<br>15,17,<br>18,20,<br>21,23,24 | |
| X | EP-A-0 363 567 (IBM)<br><br>* abstract; claims; figures 2,4 * | 1,7,13,<br>19 | |
| X<br>A | WO-A-92 09028 (WANG LABORATORIES, INC.)<br>* abstract; claims 1,2,16; figures 4,6 * | 1,4,7,10<br>5,6,<br>11-13,<br>16-19,<br>22-24 | TECHNICAL FIELDS SEARCHED (Int.Cl.5)<br><br>G06F |

The present search report has been drawn up for all claims

| Place of search | Date of completion of the search | Examiner |
|---|---|---|
| BERLIN | 9 March 1994 | Durand, J |